# EUROPÄISCHE PATENTSCHRIFT

(11) **EP 3 152 091 B1**
(45) Veröffentlichungstag und Bekanntmachung des Hinweises auf die Patenterteilung: **30.09.2020**
(21) Anmeldenummer: 15734122.3
(22) Anmeldetag: 01.07.2015
(51) Int. Cl.: B60T 8/88, B60T 13/74, B60T 17/22

(54) **BREMSVORRICHTUNG MIT EINER BREMSE UND VERFAHREN ZUM STEUERN EINER BREMSE.**
BRAKE DEVICE HAVING A BRAKE AND METHOD FOR CONTROLLING A BRAKE
DISPOSITIF DE FREINAGE MUNI D'UN FREIN ET PROCÉDÉ DE COMMANDE D'UN FREIN

(30) Priorität: 29.07.2014 DE 102014214822
(43) Veröffentlichungstag der Anmeldung: 12.04.2017
(73) Patentinhaber: Siemens Mobility GmbH, 81739 München (DE)
(72) Erfinder: SCHAUTT, Martin, 80636 München (DE); KRAUSEN, Leopold, 81375 München (DE); ROBERTS, Richard, 82205 Gilching (DE); JENNEK, Steffen, 82061 Neuried (DE); SCHIFFERS, Toni, 41812 Erkelenz (DE)
(86) Internationale Anmeldenummer: PCT/EP2015/064978
(87) Internationale Veröffentlichungsnummer: WO 2016/015941

(56) Entgegenhaltungen:
- DE-A1- 3 512 110
- DE-A1- 10 135 797

## Beschreibung

Bremsvorrichtung mit einer Bremse und Verfahren zum Steuern einer Bremse.

Die Erfindung betrifft eine Bremsvorrichtung mit einer Bremse und einem Bremssteuergerät, das eingangsseitig mit einer Bremsen-Sollgröße beaufschlagt ist und ausgangsseitig mit einem Bremsenantrieb verbunden ist, der mit einer Sensoreinrichtung zum Gewinnen einer vom Betriebszustand der Bremse abhängigen Bremsen-Istgröße versehen ist.

Eine solche Bremsvorrichtung ist in der Internationalen Anmeldung WO 03/100282 A1 dargestellt und beschrieben. Bei dieser bekannten Bremsvorrichtung wird die Drehwinkelgeschwindigkeit eines mit der Bremsvorrichtung ausgerüsteten Rades eines Fahrzeugs und die zeitliche Änderung des Bremsmomentes am Rad erfasst; sind beide Werte Null, dann befindet sich das Fahrzeug tatsächlich im Ruhezustand und die Bremse kann schließen oder geschlossen bleiben. Ist einer der beiden Werte ungleich Null, ist das Fahrzeug in Bewegung und die Bremse muss notgeöffnet werden oder muss geöffnet bleiben.

Der Erfindung liegt die Aufgabe zugrunde, bei einer Bremsvorrichtung der oben angegebenen Art auf vergleichsweise einfache Art stets sicher zu stellen, dass die Bremse einerseits keine zu hohe Bremskraft (Gefahr von Blockieren) erzeugt und andererseits eine Mindestbremskraft (zur Notbremsung) zur Verfügung stellt.

Zur Lösung dieser Aufgabe ist bei einer Bremsvorrichtung der eingangs angegebenen Art erfindungsgemäß das Bremssteuergerät über eine Reihenschaltung einer ersten Umschalteinrichtung und einer zweiten Umschalteinrichtung mit dem Bremsenantrieb verbunden ist, wobei die erste Umschalteinrichtung von einer ersten Überwachungseinheit von der Verbindung mit dem Bremssteuergerät auf eine Verbindung mit einer Bremslöseeinheit umschaltbar ist, wenn die Bremsen-Istgröße einen zulässigen Bremsen-Maximalwert überschreitet, und die zweite Umschalteinrichtung von einer zweiten Überwachungseinheit von der Verbindung mit der ersten Umschalteinrichtung auf eine Verbindung mit einer Bremsschließeinheit umschaltbar ist, wenn die Bremsen-Istgröße einen Bremsen-Mindestwert unterschreitet. Dabei können zur Bildung der Bremsen-Sollgrößen, der Bremsen-Istgrößen und der Bremsen-Maximal- und Bremsen-Mindestwerte unterschiedliche physikalische Größen heran gezogen werden, die an der Bremse abgreifbar sind; so kann beispielsweise die Zuspannkraft der Bremse oder das Bremsmoment herangezogen werden, um daraus jeweils die oben angegebenen Größen und Werte zu bilden.

Einsatzgebiet der erfindungsgemäßen Bremsvorrichtung sind dabei nicht nur Schienenfahrzeuge, vielmehr kann die erfindungsgemäße Bremsvorrichtung auch bei Kraftfahrzeugen und Werkzeugmaschinenantrieben zum Einsatz kommen.

Ein wesentlicher Vorteil der erfindungsgemäßen Bremsvorrichtung wird darin gesehen, dass sie vergleichsweise einfach aufgebaut ist, weil sie lediglich zweier Überwachungseinheiten mit zugeordneten Umschalteinrichtungen bedarf, an die einerseits eine einfach ausgebildete Bremslöseeinheit und anderseits eine ebenso einfach ausgeführte Bremsschließeinheit angeschlossen ist. Dieser einfache Aufbau führt auch zu einer sehr zuverlässigen Arbeitsweise der erfindungsgemäßen Bremsvorrichtung.

Da die erste Umschalteinrichtung zwischen einer Verbindung mit dem Bremssteuergerät und einer Verbindung mit der Bremslöseeinheit umschalten kann, kann die erste Umschalteinrichtung die Verbindung von dem Bremssteuergerät zum Bremsenantrieb unterbrechen und ein Öffnen einer von dem Bremsenantrieb angetriebenen Bremseinrichtung erzwingen.

Da die zweite Umschalteinrichtung zwischen einer Verbindung mit der ersten Umschalteinrichtung und einer Verbindung mit der Bremsschließeinheit umschalten kann, kann die zweite Umschalteinrichtung ein fälschlicherweise erfolgtes Umschalten der ersten Umschalteinrichtung überstimmen und eine Notbremsung durch Schließen der von dem Bremsenantrieb angetriebenen Bremseinrichtung erzwingen.

An sich ist aus der Druckschrift DE 101 35 797 A1 eine Bremssteuervorrichtung für Schienenfahrzeuge, die mit einer elektrischen Bremse und einer pneumatischen Bremse ausgestattet sind, bekannt, bei der mittels einer Schalteinrichtung eine Bremsfunktion der pneumatischen Bremse einerseits unterdrückt werden kann, um eine Überbremsung zu vermeiden, und andererseits bei einer Schnellbremsung ermöglicht werden kann, wenn die elektrische Bremse keine ausreichende Bremsleistung bringt. Bei dieser bekannten Bremssteuervorrichtung ist ein Versorgungsspannungseingang über die Schalteinrichtung mit einem elektrischen Steuereingang eines Rückhalteventils verbunden, wobei an einem pneumatischen Bremsleistungsausgang des Rückhalteventils die pneumatische Bremse angeschlossen ist. Die genannte Schalteinrichtung weist einen ersten Schalter, einen zweiten Schalter und einen dritten Schalter auf, wobei der zweite Schalter und der dritte Schalter eine Parallelschaltung bilden, die in Serie zu dem ersten Schalter geschaltet ist. Der erste Schalter ist geschlossen, wenn bei einer Bremsung mit der elektrischen Bremse die elektrische Bremse eine vorgegebene Mindestbremsleistung erbringt. Der zweite Schalter ist geschlossen, wenn ein vorgegebener Mindestfahrmotorenstrom überschritten wird. Der dritte Schalter ist geschlossen, wenn ein Hauptluftleistungsdruck größer als 2,8 bar ist. Zur Betätigung des ersten Schalters dient ein Antriebssteuergerät. Zur Betätigung des zweiten Schalters dient ein Mindeststromrelais und zur Betätigung des dritten Schalters dient ein elektrisches Signal eines Druckmessers beziehungsweise Druckwächters.

Bei der erfindungsgemäßen Bremsvorrichtung kann die Bremslöseeinheit unterschiedlich ausgebildet sein; als besonders vorteilhaft wird es aus Kostengründen angesehen, wenn in der Bremslöseeinheit ein Pulsmuster gespeichert ist; bei der Bremslöseeinheit kann es sich in besonders vorteilhafter Weise um einen integrierten Schaltkreis handeln.

Entsprechend kann die Bremsschließeinheit ausgebildet sein, vorteilhafterweise ebenfalls ein integrierter Schaltkreis, in dem ein weiteres Pulsmuster gespeichert ist.

Um eine zu hohe Krafterzeugung seitens der Bremsschließeinheit zu verhindern, ist in der Verbindung der zweiten Umschalteinrichtung mit der Bremsschließeinheit ein Schalter einer Schwellenwert-Einrichtung angeordnet ist, die beim Überschreiten eines Bremsen-Referenzwertes den Schalter öffnet. Dieser Bremsen-Referenzwert kann beispielsweise 75% der Höchstbremskraft betragen, wenn bei der erfindungsgemäßen Bremsvorrichtung die Bremskraft geregelt wird.

Vorteilhafterweise weist dabei die Schwellenwert-Einrichtung einen Sensor auf, der an dem Bremsenantrieb angebracht ist.

Die erfindungsgemäße Bremsvorrichtung bietet in vorteilhafter Weise auch die Möglichkeit, sie mit einer Notbremsfunktion zu versehen, indem die zweite Überwachungseinheit derart ausgebildet ist, dass sie bei einer eingangsseitigen Beaufschlagung mit einem Notbremssignal aktiviert wird. Fällt dann die Bremsen-Istgröße unter den Bremsen-Mindestwert, erfolgt eine Betätigung der zweiten Umschalteinrichtung.

Andererseits kann zur Erzielung einer Notbremsfunktion die zweite Überwachungseinheit derart ausgebildet sein, dass sie bei einer eingangsseitigen Beaufschlagung mit einem Notbremssignal ein Einschalten der zweiten Umschalteinrichtung veranlasst. Dieses Umschalten erfolgt dann direkt ohne eine Prüfung, ob die Bremsen-Istgröße den Bremsen-Mindestwert unterschritten hat.

Die erfindungsgemäße Bremsvorrichtung kann unterschiedlich ausgeführt sein, beispielsweise eine elektromechanische oder eine elektromotorische Bremse sein. In beiden Fällen ist die Sensoreinrichtung zum Gewinnen der Bremsen-Istgröße vorteilhafterweise geeignet, eine bremskraftabhängige Bremsen-Istgröße zu erzeugen; die Bremsen-Sollgröße ist dann eine Bremskraft-Sollgröße.

Die Erfindung bezieht sich ferner auf ein Verfahren zum Steuern einer Bremse mit einem ihr zugeordneten Bremssteuergerät, das eingangsseitig mit einer Bremsen-Sollgröße beaufschlagt ist und ausgangsseitig mit einem Bremsenantrieb verbunden ist, der mit einer Sensoreinrichtung zum Gewinnen einer vom Betriebszustand der Bremse abhängigen Bremsen-Istgröße versehen ist, wie es der eingangs genannten Internationalen Anmeldung entnehmbar ist, und stellt sich die Aufgabe, dieses Verfahren so auszugestalten, dass es einfach und zuverlässig ausführbar ist.

Zur Lösung dieser Aufgabe wird ausgehend von dem bekannten Verfahren erfindungsgemäß von einer das Bremssteuergerät mit dem Bremsenantrieb verbindenden Reihenschaltung einer ersten Umschalteinrichtung und einer zweiten Umschalteinrichtung die erste Umschalteinrichtung von einer ersten Überwachungseinheit von der Verbindung mit dem Bremssteuergerät auf eine Verbindung mit einer Bremslöseeinheit umgeschaltet, wenn die Bremsen-Istgröße einen zulässigen Bremsen-Maximalwert überschreitet; die zweite Umschalteinrichtung wird von einer zweiten Überwachungseinheit von der Verbindung mit der ersten Umschalteinrichtung auf eine Verbindung mit einer Bremsschließeinheit umgeschaltet, wenn die Bremsen-Istgröße einen Bremsen-Mindestwert unterschreitet.

Damit ergeben sich sinngemäß die gleichen Vorteile, wie sie oben zur erfindungsgemäßen Bremsvorrichtung angegeben sind.

Das erfindungsgemäße Verfahren kann bei Bremsen unterschiedlicher Ausführung eingesetzt werden. Handelt es sich bei der Bremse um eine mechanische Bremse mit einem mechanischen Antrieb werden als Bremsen-Sollgröße eine Bremskraft-Sollgröße und als Bremsen-Istgröße eine Bremskraft-Istgröße verwendet, weil sich diese Größen relativ leicht bilden lassen; auch mit dem Bremsmoment lassen sich entsprechende Größen bilden.

Bei einer elektromotorischen Bremse mit einem Elektromotor als Bremsenantrieb können in vorteilhafter Weise als Bremsen-Sollgröße eine Motorstrom-Sollgröße und als Bremsen-Istgröße eine Motorstrom-Istgröße verwendet werden.

Bei dem erfindungsgemäßen Verfahren können als zulässiger Bremsen-Maximalwert und als Bremsen-Mindestwert fest eingestellte Werte verwendet werden.

Ein besonders gutes und dem jeweiligen Beladungszustand des mit der erfindungsgemäßen Bremsvorrichtung ausgerüsteten Fahrzeugs angepasstes Bremsverhalten lässt sich jedoch erzielen, wenn der Bremsen-Maximalwert und der Bremsen-Mindestwert in Abhängigkeit von der aktuellen Gewichtsbelastung eines mit der Bremse ausgestatteten Rades des Fahrzeugs eingestellt werden.

Vorteilhaft ist es ferner, wenn bei einer eingangsseitigen Beaufschlagung der zweiten Überwachungseinheit mit einem Notbremssignal die zweite Umschalteinrichtung eingeschaltet wird, weil auf diese Weise mit dem erfindungsgemäßen Verfahren auf einfache Weise auch eine Notbremsung durchführbar ist.

Zu weiteren Erläuterung der Erfindung ist in
- Fig. 1: ein Ausführungsbeispiel der erfindungsgemäßen Bremsvorrichtung mit einer elektromotorischen Bremse für ein Schienenfahrzeug und in
- Fig. 2: in Diagramm, in dem eine Zuspannkraft als Bremsen-Istgröße Fist über dem Zuspannweg x gezeigt ist, dargestellt.

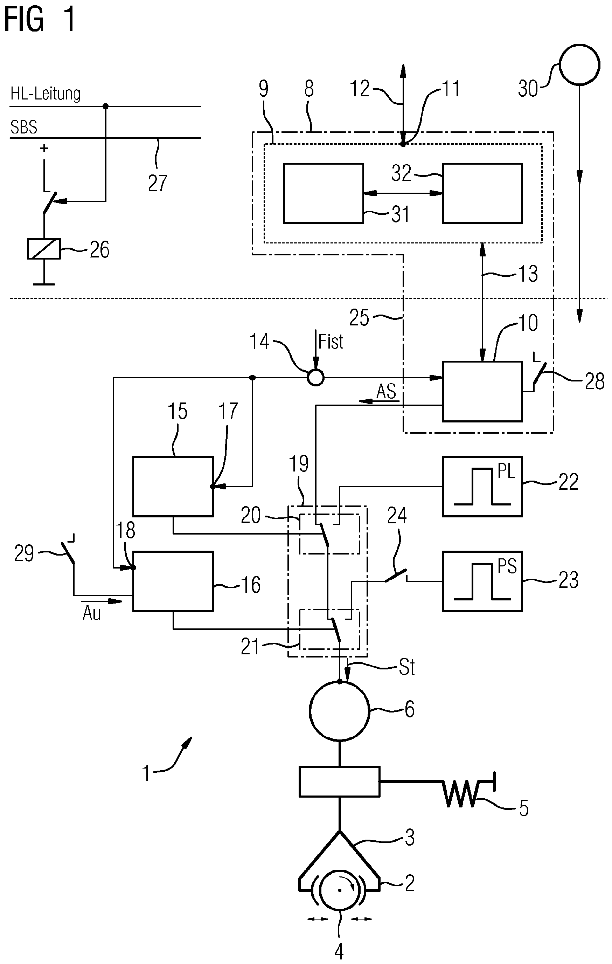

Fig. 1 zeigt in schematischer Darstellung eine Bremsvorrichtung 1 mit einer Bremse 2, die eine Bremszange 3 aufweist. Die Bremszange 3 wirkt auf ein rotierendes, abzubremsendes Bauteil 4, wie z.B. eine Bremsscheibe, um eine Bremskraft aufzubringen. Mittels einer geeigneten Mechanik ist die Bremse 2 fest mit einem Aufbau 5 verbunden, bei dem es sich z.B. um ein Drehgestell oder ein Fahrwerk eines Schienenfahrzeugs handeln kann. Zur Betätigung der Bremse 2 dient ein Bremsenantrieb, bei dem es sich im dargestellten Beispiel um einen Elektromotor 6 handelt. Der Elektromotor 6 erhält an seinem Eingang 7 Steuerbefehle und erzeugt daraufhin entsprechende Zuspannkräfte in der Bremse 2.

Zur Erzeugung der Steuerbefehle für den Elektromotor 6 dient in dem dargestellten Ausführungsbeispiel eine Steueranordnung 8, die eine zentrale Bremssteuervorrichtung 9 und ein Bremssteuergerät 10 umfasst. Räumlich wird die zentrale Bremssteuervorrichtung 9 vornehmlich im Wagen oder im Aufbau Des Schienenfahrzeugs untergebracht, während das Bremssteuergerät 10 in unmittelbarer Nähe zu der Bremse 2 angeordnet ist.

Zur zentralen Bremssteuervorrichtung 9 werden die für die Generierung eines Bremsbefehls notwendigen Signale und (Fahrzeug-)Parameter übertragen, wie z.B. die Bremsanforderung des Fahrers/ Zugführers, ein Notbrems- oder Schnellbremssignal SBS, ein Druck in der Hauptluftleitung (HL-Leitung), Angaben zum Gewicht des Schienenfahrzeugs, Geschwindigkeit des Schienenfahrzeugs, usw., und dort zentral verarbeitet. Beispielsweise sind in der zentralen Bremssteuervorrichtung 9 ein Antiblockiersystem, eine Fahrdynamikregelung und weitere Funktionen implementiert. Für den Signaleingang 11 der zentralen Bremssteuervorrichtung 8 steht eine Verbindung 12, z.B. ein BUS-System zur Verfügung.

Aus den Signalen an ihrem Eingang 11 generiert die zentrale Bremssteuervorrichtung 8 als Bremsen-Sollgröße Fsoll ein Bremssignal für das Bremssteuergerät 10 und überträgt dieses Bremssignal BS z.B. mittels einer BUS-Kommunikation-Verbindung 13 zu dem Bremssteuergerät 10. Hier wird das von der zentralen Bremssteuervorrichtung 8 ausgesendete Bremssignal BS in ein Ansteuersignal AS für den Elektromotor 6 umgesetzt. Hierzu wird die Bremsen-Sollgröße Fsoll von dem Bremssteuergerät 10 mit einer tatsächlich vorliegenden Bremsen-Istgröße Fist verglichen werden, so dass bei einer Abweichung zwischen Sollgröße Fsoll und Istgröße Fist das Ansteuersignal AS von dem Bremssteuergerät 10 mithilfe eines Regelkreises angepasst werden kann.

Zur Gewinnung der Bremsen-Istgröße, im vorliegenden Ausführungsbeispiel dem Istwert der Zuspannkraft Fist, ist die Bremse 2 mit einer in Fig. 1 nicht figürlich dargestellten Sensorik zur Ermittlung der Zuspannkraft Fist ausgerüstet; die Sensorik kann z.B. direkt in der Bremszange 3 integriert sein. Zusätzlich oder alternativ zur Zuspannkraft Fist kann das Bremsmoment der Bremse 2 ermittelt werden oder ein anderer Ersatzwert, über den die Bremskraft hergeleitet werden kann (z.B. der Motorstrom). Entsprechende Verfahren sind an sich bekannt. Der Einfachheit halber wird im Folgenden lediglich auf die Zuspannkraft abgestellt.

Die mittels der Sensorik ermittelte Bremsen-Istgröße Fist der Zuspannkraft wird über einen Einkopplungspunkt 14 dem Bremssteuergerät 10 zugeführt. Außerdem wird die Bremsen-Istgröße Fist einer ersten Überwachungseinheit 15 und einer zweiten Überwachungseinheit 16 an ihren Eingängen 17 bzw. 18 bereitgestellt. Die eine Überwachungseinheit 15 überprüft, ob die Bremsen-Istgröße Fist einen zulässigen Bremsen-Maximalwert Fmax überschreitet; die zweite Überwachungseinheit 16 prüft hingegen, ob die Bremsen-Istgröße Fist einen bestimmten Bremsen-Mindestwert Fmin unterschreitet. Diese Werte können als unveränderliche

Konstanten definiert werden oder von der zentralen Bremsteuervorrichtung 8 oder dem Bremssteuergerät 10 als veränderliche Variablen vorgegeben werden. Beispielsweise kann der zulässige Bremsen-Maximalwert Fmax in Abhängigkeit von dem aktuellen Gewicht des Schienenfahrzeugs bestimmt werden, so dass bei einem weniger schwer beladenen Fahrzeug die zulässige Bremsen-Maximalkraft aufgrund der geringeren möglich übertragbaren Reibkraft gesenkt wird, um einem Blockieren durch zu hohe Bremskräfte vorzubeugen. Darüber hinaus können bei einem Fahrzeug in Abhängigkeit der Gewichtsverteilung im Schienenfahrzeug und/oder der Gewichtsverlagerung während einer Bremsung die zulässigen Bremsen-Maximalwerte und die Bremsen-Mindestwerte individuell für jede Bremse bestimmt werden. So kann verhindert werden, dass die Bremsen einer nur leicht belasteten Fahrzeugachse wegen eines zu hoch eingestellten Referenzwertes überbremst werden.

Das Bremssteuergerät 10 ist über eine Reihenschaltung 19 einer ersten und einer zweiten Umschalteinrichtung 20 bzw. 21 mit dem Eingang 7 des Elektromotors 6 verbunden. Dabei ist die erste Umschalteinrichtung 20 durch die erste Überwachungseinheit 15 umschaltbar, so dass die erste Umschalteinrichtung 20 von der dargestellten Schaltstellung (Verbindung mit dem Bremssteuergerät 10) in eine weitere Schaltstellung umschaltbar ist, in der eine Verbindung zu einer Bremslöseeinheit 22 herstellbar ist. Die zweite Umschalteinrichtung 21 ist von der zweiten Überwachungseinheit 16 betätigbar und von der dargestellten Schaltstellung - es besteht eine Verbindung zu der ersten Umschalteinrichtung 20 - in eine Schaltstellung umschaltbar, in der eine Bremsschließeinheit 23 angeschlossen und mit dem Eingang 7 des Elektromotors verbunden ist.

Mit der dargestellten Bremsvorrichtung 1 kann ein Abbremsen mit unerlaubt hohen Bremskräften - die Bremsen-Istgröße Fist ist größer als der zulässige Bremsen-Maximalwert Fmax - mit einer sogenannten Notöffnungsfunktion verhindert werden, wie es nachfolgend beschrieben ist:

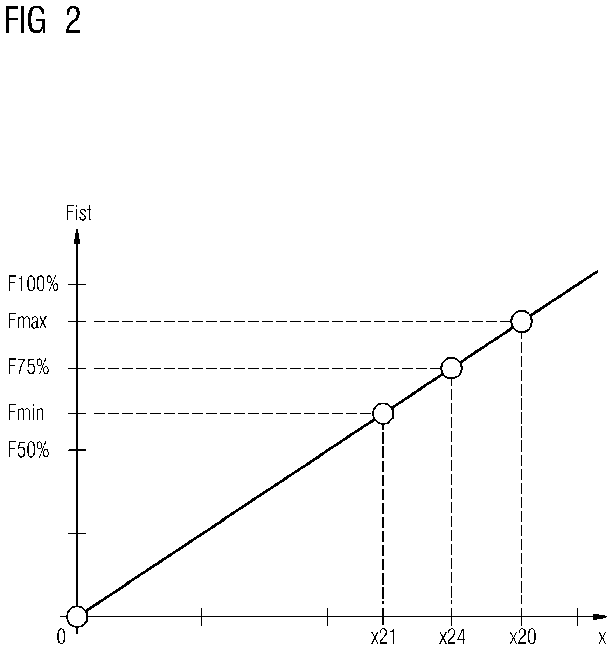

Fig. 2 zeigt, dass sich die Bremsen-Istgröße Fist bzw. im hier behandelten Fall die Zuspannkraft Fist der Bremse 2 mit zunehmender Betätigung des Elektromotors 6 bzw. mit größer werdendem Zuspannweg x erhöht, wobei der Einfachheit halber angenommen ist, dass sich die Betätigung des Elektromotors 6 als Zuspannweg x ausdrückt und ein linearer Zusammenhang zwischen Zuspannweg x und der Zuspannkraft Fist besteht. Die Zuspannkraft Fist kann somit entsprechend dem Zuspannweg x Zuspannkräfte Fist zwischen Null und der Höchstbremskraft F100% annehmen. Sobald jedoch der (variabel parametrierbare) zulässige Bremsen-Maximalwert bzw. die maximal zulässige Zuspannkraft Fmax überschritten ist, wird die erste Umschalteinrichtung 20 von der Überwachungseinheit 15 betätigt. Dadurch wird, wie in Fig. 1 gezeigt ist, eine Signalübertragung von dem Bremssteuergerät 10 zum Elektromotor 6 unterbrochen und auf die Bremslöseeinheit 22 geschaltet, die ein Pulsmuster PL bereit hält. Dies hat zur Folge, dass der Elektromotor 6 unabhängig von den ausgegebenen Signalen der zentralen Bremssteuervorrichtung 9 oder des Bremssteuergeräts 10 allein mit dem Pulsmuster PL angesteuert wird. Das Pulsmuster PL ist unverlierbar und kann z.B. in Form eines integrierten Schaltkreises (z.B. eines Field Programmable Gate Array realisiert sein).

Das Pulsmuster PL wird an den Elektromotor 6 gesendet und veranlasst diesen, die Zuspannkraft Fist abzusenken bzw. die Bremse 2 zu lösen. Fällt die Zuspannkraft Fist der Bremse 2 unter den zulässigen Bremsen-Maximalwert Fmax, dann wird die Umschaltung der ersten Umschalteinrichtung 20 von der ersten Überwachungseinheit 15 wieder aufgehoben werden und die Breme 2 wieder durch das Bremssteuergerät 10 angesteuert. Um zu verhindern, dass aufgrund von Schwankungen der mittels nicht dargestellter Sensoren erfassten Zuspannkraft Fist im engen Wertebereich des zulässigen Bremsen Maximalwerts Fmax die erste Überwachungseinheit 15 die erste Umschalteinrichtung 20 wiederholt hin- und herschaltet und sich ein sogenanntes Flattern einstellt, kann der Schwellenwert zur Zurückschaltung der ersten Umschalteinrichtung 20 etwas unterhalb des zulässigen Bremsen-Maximalwerts Fmax gewählt werden - z.B. Einprägen eines Hysterese-Verhaltens durch einen Zweipunktregler.

Je nachdem wie das Pulsmuster PL der Bremslöseeinheit 22 beschaffen ist, öffnet die Bremse 2 ganz oder nur teilweise. Davon abhängig stellt sich eine entsprechende Zuspannkraft Fist ein. Zusätzlich kann zur Erhöhung der Sicherheit ein redundanter Schalter vorgesehen sein, der bei einem vollständigen Öffnen der Bremse 2 betätigt wird und den geöffneten Zustand der zentralen Bremssteuervorrichtung 9 oder dem Bremssteuergerät 10 meldet.

Damit die Bremse 2 auch bei einer fehlerhaften Notöffnungsfunktion - beispielsweise löst die Überwachungseinheit 15 in fehlerhafter Weise ein Umschalten der ersten Umschalteinrichtung 20 aus - weiterhin betätigt werden kann, ist die zweite Umschalteinrichtung 21 vorgesehen, die von der zweiten Überwachungseinheit 16 betätigbar ist, wenn die Zuspannkraft Fist unterhalb eines Bremsen-Mindestwerts Fmin fällt. Da die zweite Umschalteinrichtung 21 im Ansteuerpfad für den Elektromotor 6 der ersten Umschalteinrichtung 20 nachgeordnet ist, wird die erste Umschalteinrichtung 20 von der zweiten Umschalteinrichtung 21 quasi überstimmt. Dadurch kann die Übertragung eines von dem Bremssteuergerät 10 fehlerhafterweise abgegebenen Ansteuersignals AS zur Bremsenöffnung oder ein von der Bremslöseeinheit 22 ausgesendetes Pulsmuster PL aufgehoben werden und stattdessen ein von der Bremsschließeinheit 23 ausgesendetes weiteres Pulsmuster PS bzw. Schließsignal übertragen werden. Das weitere Pulsmuster PS kann als unverlierbares Pulsmuster in der Bremsschließeinheit 23 hinterlegt sein. Durch das weitere Pulsmuster PS wird der Elektromotor 6 veranlasst, die Bremse 2 entsprechend zu betätigen.

Die weitere Umschalteinrichtung 21 kann also auch eine Signalübertragung vom Bremssteuergerät 10 (bei entsprechender Schaltstellung der ersten Umschalteinrichtung 20, wie sie in Fig. 1 gezeigt ist) zum Elektromotor 6 unterbrechen und eine Betätigung der Bremse 2 von der Bremsschließeinheit 23 her sicher stellen, wenn fälschlicherweise von dem Bremssteuergerät 10 ein Öffnungssignal generiert worden ist oder das Bremssteuergerät 10 ausgefallen ist..

Um auch eine zu hohe Zuspannkraft durch das weitere Pulsmuster der Bremsschließeinheit 23 zu verhindern, kann in der Verbindung zwischen der zweiten Umschalteinrichtung 21 und der Bremsschließeinheit 23 ein Schalter 24 integriert werden. Dieser Schalter 24 ist vorteilhafterweise als Öffner ausgebildet, der bei Überschreitung eines Referenzwertes F75% (siehe Fig. 2) die Verbindung der Bremsschließeinheit 23 zum Elektromotor 6 bei einem Zuspannweg x24 unterbricht. Wie ebenfalls in Fig. 2 gezeigt, kann dieser Referenzwert auf beispielsweise 75% der Höchstbremskraft (F100%) festgelegt werden.

Bei der erfindungsgemäßen Bremsvorrichtung kann der Referenzwert F75% innerhalb gewisser Schranken parametriert und mit dem zulässigen Bremsen-Maximalwert Fmax verknüpft werden. Beispielsweise kann bei einem leichter beladenen Fahrzeug der Referenzwert F75% analog zu Bremsen-Maximalwert Fmax gesenkt werden, um aufgrund des wegen des geringeren Gewichts reduzierten Bremspotentials nicht die Blockiergrenze der Bremse 2 zu überschreiten. D.h., es wird verhindert,
dass die Übertragung des weiteren Pulsmusters PS über den Schalter 24 zu spät unterbrochen wird und die Bremse 2 blockiert. Um für die Betätigung des Schalters 24 den Einsatz eines weiteren Schaltkreises einzusparen, kann der Schalter 24 als rein mechanischer Schalter oder Weg-Sensor ausgebildet sein, der abhängig vom Zuspannweg x bei dem Zuspannweg x24 schaltet.

Prinzipiell gilt dies aber auch für die Überwachungseinheiten 15 und 16 im Zusammenwirken mit den Umschalteinrichtungen 20 und 21, da wie Fig. 2 zeigt, zwischen Zuspannweg x und Zuspannkraft F eine eindeutige (funktionale) Zuordnung besteht; ein von der einen Überwachungseinheit 20 erfasster Zuspannweg x20 entspricht der Bremskraft Fmax und ein von der zweiten Überwachungseinheit 21 erfasster Zuspannweg x21 der Bremskraft Fmin. Somit kann sichergestellt werden, dass die Bremse 2 unabhängig von einem Fehler in dem Bremssteuergerät 10 oder in der Bremslöseeinheit 22 sicher schließen kann und dabei gleichzeitig einen bestimmten Wert der Zuspannkraft nicht überschreitet, um z.B. einem Blockieren vorzubeugen.

Sofern die Werte für den zulässigen Bremsen-Maximalwert Fmax und den Bremsen-Mindestwert Fmin veränderlich einstellbar sein sollen, kann eine Verbindung zur Übertragung der jeweiligen Werte bzw. Parameter vorgesehen werden. Beispielsweise wird der Bremsen-Mindestwert Fmin
von der zentralen Bremsvorrichtung 9 über einen Signalweg 25 an die zweite Überwachungseinheit 16 gesendet. Zur Verbesserung der Sicherheit kann dieser Signalweg 25 redundant oder als sicherer Tunnel ausgebildet sein.

In Analogie zur Notöffnungsfunktion kann zur Verhinderung des sogenannten Flatterns der Schwellenwert zur Zurückschaltung des Schalters 24 etwas unterhalb von der Zuspannkraft F75% gewählt werden (z.B. Einprägen eines Hysterese-Verhaltens durch einen Zweipunktregler).

Ferner kann die zweite Überwachungseinheit 16 eingangsseitig mit einem Auslösesignal Au beaufschlagbar sein, so dass die zweite Überwachungseinheit 16 die zweite Umschalteinrichtung 21 ausschließlich bei Vorhandensein dieses Auslösesignals Au schalten kann. Wird dieses Auslösesignal als Notbremssignal verwendet, kann auf diese Weise der zweiten Überwachungseinheit 16 eine Notbremsfunktion oder eine Schnellbremsfunktion verliehen werden, die nur
im Gefahrfall ein Schließen der Bremse 2 ermöglicht. Dieses Auslösesignal Au, das ein Umschalten des Hauptschalters 26 erzwingt, kann z.B. automatisch (bei einem Automobil durch einen Notbremsassistenten) oder durch eine bewusste Bedienhandlung einer Person erzeugt werden. Beispielsweise kann bei einem Schienenfahrzeug einerseits über eine als SBS bezeichnete Leitung 27 direkt ein beispielsweise elektrisches Schnellbrems-/Notbremssignal übertragen werden, das bei Vorliegen einer Gefahrensituation automatisch erzeugt wird. Andererseits kann
durch manuelles Öffnen eines nicht dargestellten Ventils durch eine Person der Luftdruck als ein pneumatisches Signal in der sog. HL-Leitung eines Schienenfahrzeugs abgesenkt werden. Beide Ereignisse veranlassen ein Umschalten des Hauptschalters 26. Das Umschalten des Hauptschalters 26 erzwingt wiederum ein Umschalten von Kontakten 28 und 29, wodurch das Auslösesignal Au nicht nur an die zweite Überwachungseinheit 16, sondern auch an das Bremssteuergerät 10 gesendet wird.

Das Auslösesignal Au kann als invertiertes Signal ausgeführt werden, d.h., es wird durch eine Unterbrechung der Signalübertragung mittels der Kontakte 28 und 29 erzeugt. So kann nämlich auch bei einem elektrischen Stromversorgungsausfall eine Notbremsung ausgelöst werden, indem der Hauptschalter 26, der z.B. als Elektromagnet ausgebildet wird, bei einer Stromunterbrechung die Kontakte 28 und 29 selbsttätig öffnet.

Bei Verwendung des Auslösesignals Au als Notbremssignal bewirkt dieses eine entsprechende Notbremsfunktion, die von dem Bremssteuergerät 10 umgesetzt wird. Liegt in dem Bremssteuergerät 10 ein Fehler vor oder wird das Bremssteuergerät 10 fälschlicherweise von der ersten Umschalteinrichtung 20 überstimmt, so dass der erforderliche Bremsen-Mindestwert Fmin nicht erreicht wird, greift die zweite Überwachungseinheit 16 ein, da über den Kontakt 29 sowohl das Notbremssignal (Auslösesignal Au) anliegt, als auch die Überwachung festgestellt hat, dass der Bremsen-Mindestwert Fmin nicht überschritten wird. Die zweite Überwachungseinheit 16 schaltet die zweite Umschalteinrichtung 21 somit nur bei Vorliegen eines Notbremssignals und dient damit quasi als Notbremsüberwachung. Infolgedessen könnten für Fehlerfälle, bei denen keine Notbremsanforderung vorliegt, andere Sicherheitsmaßnahmen greifen.

Die Stromversorgung aller elektrischen Verbraucher der dargestellten Bremsvorrichtung 1 wird durch eine Stromquelle 30, z.B. eine Batterie oder ein Versorgungsnetz sichergestellt.

Zur Verbesserung der Sicherheit kann die zentrale Bremssteuervorrichtung 9 redundant aufgebaut sein und über mehrere Teilkomponenten 31 und 32 verfügen. Diese Teilkomponenten, die hier mit BSG BT2 und BSG AT1 bezeichnet werden, können sich gegenseitig kontrollieren und im Fehlerfall geeignete Gegenmaßnahmen treffen. Derartige redundant aufgebaute Systeme und
Steuerungen sind an sich bekannt.

Ferner kann die Erhöhung der Sicherheit durch ein diversitäres System begünstigt werden. Demnach bietet sich an, für die Teilkomponente 32 der zentralen Bremssteuervorrichtung 9 und das Bremssteuergerät 10 jeweils einen Microcontroller einzusetzen, der komplexe Funktionen beherrscht. Um die Microcontroller abzusichern, sind für die Teilkomponente 31 der zentralen Bremssteuervorrichtung 9 sowie für die Überwachungseinheiten 20 und 21 Bauteile mit einer sehr hohen Zuverlässigkeit zu wählen, die hingegen nur einfache Überwachungsfunktionen bewältigen
müssen.

## Patentansprüche

1. Bremsvorrichtung (1) mit einer Bremse (2) und einem Bremssteuergerät (10), das eingangsseitig mit einer Bremsen-Sollgröße (Fsoll) beaufschlagt ist und ausgangsseitig mit einem Bremsenantrieb (6) verbunden ist, der mit einer Sensoreinrichtung zum Gewinnen einer vom Betriebszustand der Bremse (2) abhängigen Bremsen-Istgröße (Fist) versehen ist,
**dadurch gekennzeichnet, dass**
das Bremssteuergerät (10) über eine Reihenschaltung (19) einer ersten Umschalteinrichtung (20) und einer zweiten Umschalteinrichtung (21) mit dem Bremsenantrieb (6) verbunden ist, wobei die erste Umschalteinrichtung (20) von einer ersten Überwachungseinheit (15) von der Verbindung mit dem Bremssteuergerät (10) auf eine Verbindung mit einer Bremslöseeinheit (22) umschaltbar ist, wenn die Bremsen-Istgröße (Fist) einen zulässigen Bremsen-Maximalwert (Fmax) überschreitet, und die zweite Umschalteinrichtung (21) von einer zweiten Überwachungseinheit (16) von der Verbindung mit der ersten Umschalteinrichtung (20) auf eine Verbindung mit einer Bremsschließeinheit (23) umschaltbar ist, wenn die Bremsen-Istgröße (Fist) einen Bremsen-Mindestwert (Fmin) unterschreitet.

2. Bremsvorrichtung nach Anspruch 1,
**dadurch gekennzeichnet, dass**
in der Bremslöseeinheit (22) ein Pulsmuster (PL) gespeichert ist.

3. Bremsvorrichtung nach Anspruch 2,
**dadurch gekennzeichnet, dass**
die Bremslöseeinheit (22) ein integrierter Schaltkreis ist.

4. Bremsvorrichtung nach einem der vorangehenden Ansprüche,
**dadurch gekennzeichnet, dass**
in der Bremsschließeinheit (23) ein weiteres Pulsmuster (PS) gespeichert ist.

5. Bremsvorrichtung nach Anspruch 4,
**dadurch gekennzeichnet, dass**
die Bremsschließeinheit (23) ein integrierter Schaltkreis ist.

6. Bremsvorrichtung nach Anspruch 1,
**dadurch gekennzeichnet, dass**
in der Verbindung der zweiten Umschalteinrichtung (21) mit der Bremsschließeinheit (23) ein Schalter (24) einer Schwellenwert-Einrichtung angeordnet ist, die beim Überschreiten eines Bremsen-Referenzwertes den Schalter (24) öffnet.

7. Bremsvorrichtung nach Anspruch 6,
**dadurch gekennzeichnet, dass**
die Schwellenwert-Einrichtung einen Sensor aufweist, der an dem Bremsenantrieb (6) angebracht ist.

8. Bremsvorrichtung nach Anspruch 1,
**dadurch gekennzeichnet, dass**
die zweite Überwachungseinheit (16) derart ausgebildet ist, dass sie bei einer eingangsseitigen Beaufschlagung mit einem Notbremssignal (Au) aktiviert wird.

9. Bremsvorrichtung nach einem der vorangehenden Ansprüche,
**dadurch gekennzeichnet, dass**
die Bremse eine elektromechanische Bremse und der Bremsenantrieb ein elektromotorischer Antrieb ist.

10. Bremsvorrichtung nach Anspruch 9,
**dadurch gekennzeichnet, dass**
die Sensoreinrichtung zum Gewinnen der Bremsen-Istgröße geeignet ist, eine bremskraftabhängige Bremsen-Istgröße (Fist) zu erzeugen, und die Bremsen-Sollgröße (Fsoll) eine Bremskraft-Sollgröße ist.

11. Verfahren zum Steuern einer Bremse (2) mit einem ihr zugeordneten Bremssteuergerät (10), das eingangsseitig mit einer Bremsen-Sollgröße (Fsoll) beaufschlagt ist und ausgangsseitig mit einem Bremsenantrieb (6) verbunden ist, der mit einer Sensoreinrichtung zum Gewinnen einer vom Betriebszustand der Bremse (2) abhängigen Bremsen-Istgröße (Fist) versehen ist, **dadurch gekennzeichnet, dass**
von einer das Bremssteuergerät (10) mit dem Bremsenantrieb (6) verbindenden Reihenschaltung (19) einer ersten Umschalteinrichtung (20) und einer zweiten Umschalteinrichtung (21) die erste Umschalteinrichtung (20) von einer ersten Überwachungseinheit (15) von der Verbindung mit dem Bremssteuergerät (10) auf eine Verbindung mit einer Bremslöseeinheit (22) umgeschaltet wird, wenn die Bremsen-Istgröße (Fist) einen zulässigen Bremsen-Maximalwert (Fmax) überschreitet, und die zweite Umschalteinrichtung (21) von einer zweiten Überwachungseinheit (16) von der Verbindung mit der ersten Umschalteinrichtung (20) auf eine Verbindung mit einer Bremsschließeinheit (23) umgeschaltet wird, wenn die Bremsen-Istgröße (Fist) einen Bremsen-Mindestwert (Fmin) unterschreitet.

12. Verfahren nach Anspruch 11,
**dadurch gekennzeichnet, dass**
bei einer elektromechanischen Bremse mit einem elektromechanischen Antrieb als Bremsen-Sollgröße (Fsoll) eine Bremskraft-Sollgröße und als Bremsen-Istgröße eine Bremskraft-Istgröße (Fist) verwendet wird.

13. Verfahren nach Anspruch 11,
**dadurch gekennzeichnet, dass**
bei einer elektromechanischen Bremse mit einem Elektromotor als Bremsenantrieb als Bremsen-Sollgröße (Fsoll) eine Motorstrom-Sollgröße und als Bremsen-Istgröße eine Motorstrom-Istgröße verwendet wird.

14. Verfahren nach einem der Ansprüche 11 bis 13,
**dadurch gekennzeichnet, dass**
der zulässige Bremsen-Maximalwert (Fmax) und der Bremsen-Mindestwert (Fmin) in Abhängigkeit von der aktuellen Gewichtsbelastung eines mit der Bremse (2) ausgestatteten Rades eines Fahrzeugs eingestellt werden.

15. Verfahren nach einem der Ansprüche 11 bis 14,
**dadurch gekennzeichnet, dass**
bei einer eingangsseitigen Beaufschlagung der zweiten Überwachungseinheit (16) mit einem Notbremssignal (Au) die zweite Umschalteinrichtung (16) eingeschaltet wird.

## Claims

1. Brake device (1) having a brake (2) and a brake control device (10), to which a brake setpoint variable (Fsoll) is applied on the input side, and which on the output side is connected to a brake drive (6) which is provided with a sensor device for obtaining a brake actual variable (Fist) that depends on the operating state of the brake (2),
**characterised in that**
the brake control device (10) is connected to the brake drive (6) via a series connection (19) of a first switchover device (20) and a second switchover device (21), wherein the first switchover device (20) can be switched from the connection to the brake control device (10) to a connection to a brake release unit (22) by a first monitoring unit (15) if the brake actual variable (Fist) exceeds a permissible brake maximum value (Fmax), and the second switchover device (21) can be switched from the connection to the first switchover device (20) to a connection to a brake application unit (23) by a second monitoring unit (16) if the brake actual variable (Fist) falls below a brake minimum value (Fmin).

2. Brake device according to claim 1,
**characterised in that**
a pulse pattern (PL) is stored in the brake release unit (22).

3. Brake device according to claim 2,
**characterised in that**
the brake release unit (22) is an integrated circuit.

4. Brake device according to one of the preceding claims,
**characterised in that**
a further pulse pattern (PS) is stored in the brake application unit (23).

5. Brake device according to claim 4,
**characterised in that**
the brake application unit (23) is an integrated circuit.

6. Brake device according to claim 1,
**characterised in that**
a switch (24) of a threshold value device is arranged in the connection of the second switchover device (21) to the brake application unit (23) and opens the switch (24) when a brake reference value is exceeded.

7. Brake device according to claim 6,
**characterised in that**
the threshold device has a sensor which is attached to the brake drive (6).

8. Brake device according to claim 1,
**characterised in that**
the second monitoring unit (16) is embodied such that it is activated when an emergency brake signal (Au) is applied on the input side.

9. Brake device according to one of the preceding claims,
**characterised in that**
the brake is an electromechanical brake and the brake drive is an electromotive drive.

10. Brake device according to claim 9,
**characterised in that**
the sensor device for obtaining the brake actual variable is suitable for generating a brake-force-dependent brake actual variable (Fist), and the brake setpoint variable (Fsoll) is a brake force setpoint variable.

11. Method for controlling a brake (2) having a brake control device (10) associated therewith, to which a brake setpoint variable (Fsoll) is applied on the input side, and which on the output side is connected to a brake drive (6) which is provided with a sensor device for obtaining a brake actual variable (Fist) that depends on the operating state of the brake (2), **characterised in that**
by a series connection (19) of a first switchover device (20) and a second switchover device (21) connecting the brake control device (10) to the brake drive (6) the first switchover device (20) is switched from the connection to the brake control unit (10) to a connection to a brake release unit (22) by a first monitoring unit (15) if the brake actual variable (Fist) exceeds a permissible brake maximum value (Fmax), and the second switchover device (21) can be switched from the connection to the first switchover device (20) to a connection to a brake application unit (23) by a second monitoring unit (16) if the brake actual variable (Fist) falls below a brake minimum value (Fmin).

12. Method according to claim 11,
**characterised in that**
in the case of an electromechanical brake with an electromechanical drive, a brake force setpoint variable is used as the brake setpoint variable (Fsoll) and a brake force actual variable (Fist) as the brake actual variable.

13. Method according to claim 11,
**characterised in that**
in the case of an electromechanical brake with an electric motor as the brake drive, a motor current setpoint variable is used as the brake setpoint variable (Fsoll) and a motor current actual variable as the brake actual variable.

14. Method according to one of claims 11 to 13,
**characterised in that**
the permissible brake maximum value (Fmax) and the brake minimum value (Fmin) are set as a function of the current weight load of a vehicle wheel fitted with the brake (2).

15. Method according to one of claims 11 to 14,
**characterised in that**
when an emergency brake signal (Au) is applied to the second monitoring unit (16) on the input side, the second switching device (16) is switched on.

## Revendications

1. Système (1) de freinage, comprenant un frein (2) et un appareil (10) de commande de frein, auquel s'applique, du côté de l'entrée, une grandeur (Fsoll) de consigne de freinage et qui est relié, du côté de la sortie, à un entraînement (6) de frein, pourvu d'un dispositif de capteur pour obtenir une grandeur (Fist) réelle de freinage, qui dépend de l'état de fonctionnement du frein (2),
**caractérisé en ce que**
l'appareil (10) de commande de frein est relié à l'entraînement (6) du frein par l'intermédiaire d'un circuit (19) série d'un premier dispositif (20) de commutation et d'un deuxième dispositif (21) de commutation, le premier dispositif (20) de commutation pouvant être commuté, par une première unité (15) de contrôle, de la liaison avec l'appareil (10) de commande de frein à une liaison avec une unité (22) de desserrage du frein, si la grandeur (Fist) réelle de freinage dépasse une valeur (Fmax) maximum de freinage admissible et le deuxième dispositif (21) de commutation peut être commuté, par une deuxième unité (16) de contrôle, de la liaison avec le premier dispositif (20) de commutation à une liaison avec une unité (23) de serrage du frein, si la grandeur (Fist) réelle de freinage est inférieure à une valeur (Fmin) minimum de freinage.

2. Système de frein suivant la revendication 1,
**caractérisé en ce qu'**
un motif (PL) d'impulsion est mis en mémoire dans l'unité (22) de desserrage du frein.

3. Système de frein suivant la revendication 2,
**caractérisé en ce que**
l'unité (22) de desserrage du frein est un circuit intégré.

4. Système de frein suivant l'une des revendications précédentes,
**caractérisé en ce qu'**
un autre motif (PS) d'impulsion est mis en mémoire dans l'unité (23) de serrage du frein.

5. Système de frein suivant la revendication 4,
**caractérisé en ce que**
l'unité (23) de serrage du frein est un circuit intégré.

6. Système de frein suivant la revendication 1,
**caractérisé en ce que**,
dans la liaison du deuxième dispositif (21) de commutation avec l'unité (23) de serrage du frein, est monté un interrupteur (24) d'un dispositif à valeur de seuil, qui ouvre l'interrupteur (24), lorsqu'une valeur de référence de freinage est dépassée.

7. Système de frein suivant la revendication 6,
**caractérisé en ce que**
le dispositif à valeur de seuil a un capteur, qui est monté sur l'entraînement (6) de frein.

8. Système de frein suivant la revendication 1,
**caractérisé en ce que**
la deuxième unité (16) de contrôle est constituée de manière à être activée lors de l'application du côté de l'entrée d'un signal (Au) de frein d'urgence.

9. Système de frein suivant l'une des revendications précédentes,
**caractérisé en ce que**
le frein est un frein électromécanique et l'entraînement de frein est un entraînement par moteur électrique.

10. Système de frein suivant la revendication 9,
**caractérisé en ce que**
le dispositif de capteur pour obtenir la grandeur réelle de freinage est propre à produire une grandeur (Fist) réelle de freinage, qui dépend de la force de freinage, et la grandeur (Fsoll) de consigne de freinage est une grandeur de consigne de force de freinage.

11. Procédé de commande d'un frein (2) par un appareil (10 ) de commande de frein, qui lui est associé, et auquel s'applique, du côté de l'entrée, une grandeur (Fsoll) de consigne de freinage et qui est relié, du côté de la sortie, à un entraînement (6) de frein pourvu d'un dispositif de capteur pour obtenir une grandeur (Fist) réelle de freinage, qui dépend de l'état de fonctionnement du frein (2),
**caractérisé en ce que**
par un circuit (19) série reliant l'appareil (10) de commande de frein à l'entraînement (6) de frein et composé d'un premier dispositif (20) de commutation et d'un deuxième dispositif (21) de commutation, on commute le premier dispositif (20) de commutation, par une première unité (15) de contrôle, de la liaison à l'appareil (10) de commande de frein à une liaison à une unité (22) de desserrage du frein, si la grandeur (Fist) réelle de freinage dépasse une valeur (Fmax) maximum de freinage admissible, et on commute le deuxième dispositif (21) de commutation, par une deuxième unité (16) de contrôle, de la liaison au premier dispositif (20) de commutation à une liaison à un dispositif (23) de serrage du frein, si la grandeur (Fist) réelle de freinage est inférieure à une valeur (Fmin) minimum de freinage.

12. Procédé suivant la revendication 11,
**caractérisé en ce que**,
pour un frein électromécanique ayant un entraînement électromécanique, on utilise comme grandeur (Fsoll) de consigne de freinage, une grandeur de consigne de force de freinage, et comme grandeur réelle de freinage, une grandeur (Fist) réelle de force de freinage.

13. Procédé suivant la revendication 11,
**caractérisé en ce que**,
pour un frein électromécanique ayant un moteur électrique comme entraînement du frein, on utilise comme grandeur (Fsoll) de consigne de freinage, une grandeur de consigne de courant du moteur, et comme grandeur réelle de freinage, une grandeur réelle de courant du moteur.

14. Procédé suivant l'une des revendications 11 à 13,
**caractérisé en ce que**
l'on règle la valeur (Fmax) maximum de freinage admissible et la valeur (Fmin) minimum de freinage en fonction de la charge pondérale en cours d'une roue d'un véhicule équipée du frein (2).

15. Procédé suivant l'une des revendications 11 à 14,
**caractérisé en ce que**,
lorsqu'un signal (Au) de frein d'urgence est appliqué du côté de l'entrée à la deuxième unité (16) de contrôle, on enclenche le deuxième dispositif (16) de commutation.
